# EUROPÄISCHE PATENTANMELDUNG

(11) **EP 1 244 064 A1**
(43) Veröffentlichungstag der Anmeldung: **25.09.2002**
(21) Anmeldenummer: 02090091.6
(22) Anmeldetag: 01.03.2002
(51) Int. Cl.: G07B 17/00

(54) **Frankiermaschine mit einer Datenübertragungseinrichtung**

(30) Priorität: 21.03.2001 DE 10114533
(71) Anmelder: Francotyp-Postalia AG & Co. KG, 16547 Birkenwerder (DE)
(72) Erfinder: Lodge, Graham Roderick, Needingworth Cambridgeshire PE27 4SH (GB)

(57) **Zusammenfassung**

Frankiermaschine mit einer zentralen Verarbeitungseinrichtung (11) und einer damit verbundenen Datenübertragungseinrichtung (12) zum Übertragen von Informationen über ein Telekommunikationsnetz (5) zwischen der Verarbeitungseinrichtung (11) und einer entfernten Datenzentrale (7), wobei die Datenübertragungseinrichtung (12) Verbindungsmittel (13) zum Verbinden mit einer Telekommunikationsleitung (4) des Telekommunikationsnetzes (5) aufweist, wobei eine Überwachungseinrichtung (14) zum Überwachen des Nutzungszustandes der Telekommunikationsleitung (4) vorgesehen ist. Verfahren zum Betreiben einer Frankiermaschine (2) sowie Verfahren zur Datenkommunikation zwischen einer Frankiermaschine (2) und einer entfernten Datenzentrale (7).

## Beschreibung

Die vorliegende Erfindung betrifft eine Frankiermaschine mit einer zentralen Verarbeitungseinrichtung und einer damit verbundenen Datenübertragungseinrichtung zum Übertragen von Informationen über ein Telekommunikationsnetz zwischen der Verarbeitungseinrichtung und einer entfernten Datenzentrale, wobei die Datenübertragungseinrichtung Verbindungsmittel zum Verbinden mit einer Telekommunikationsleitung des Telekommunikationsnetzes aufweist. Sie betrifft weiterhin ein System, welches wenigstens eine erfindungsgemäße Frankiermaschine und eine über ein Telekommunikationsnetz damit verbindbare entfernte Datenzentrale umfasst. Weiterhin betrifft sie ein Verfahren zum Betreiben einer Frankiermaschine sowie ein Verfahren zur Datenkommunikation zwischen einer Frankiermaschine und einer entfernten Datenzentrale.

Bei Frankiermaschinen müssen diejenigen Register, welche den noch für Frankierabdrucke zur Verfügung stehenden Gesamtportowert enthalten, regelmäßig nachgeladen werden, um einen kontinuierlichen Betrieb zu ermöglichen. Dies geschieht herkömmlicherweise über ein entsprechendes Modem der Frankiermaschine, mittels dessen eine Verbindung zu einer entfernten Datenzentrale hergestellt werden kann. Das Portonachladen erfolgt dann nach dem Verbindungsaufbau nach bestimmten vorgegebenen Nachladeprotokollen, welche strengen Sicherheitsstandards entsprechen müssen.

Herkömmliche Frankiermaschinen waren bisher in aller Regel für ein relativ großes Postvolumen von Firmen oder dergleichen ausgelegt, sodass sie üblicherweise in einer gesonderten Poststelle mit einem gesonderten Anschluss zu einem Telefonnetz aufgestellt wurden. Deren Modems sind demgemäß in der Regel dahingehend ausgelegt, dass für sie ein gesonderter Telefonanschluss zur Verfügung steht.

Zwar werden mittlerweile auch Frankiermaschinen für kleinere Postvolumina, wie beispielsweise kleinere Büros oder dergleichen, angeboten. Für diese wird jedoch in der Regel dieselbe Art Modem eingesetzt, wie sie schon vorstehend beschrieben wurden.

Gerade in kleineren Büros oder an so genannten Heimarbeitsplätzen besteht jedoch häufig das Problem, dass kein gesonderter Telefonanschluss mit einer eigenen Telefonleitung für das Modem der Frankiermaschine zur Verfügung steht, sondern in der Regel an einem Mehrfachanschluss neben dem Modem der Frankiermaschine noch andere Telekommunikationsgeräte, wie beispielsweise Telefax, Telefon und Computer mit Internet-Zugang, an eine einzige Telefonleitung angeschlossen sind. Selbst wenn die Telefonleitung, wie bei einem herkömmlichen ISDN-Anschluss, mehrere - in der Regel aber nur zwei oder drei - parallel zueinander nutzbare Kanäle zur Verfügung stellt, hat dies zur Folge, dass je nach Priorität der zur Verfügung stehenden Steckplätze die Telefonleitung durch einen Portonachladevorgang der Frankiermaschine über längere Zeit blockiert sein kann. Ebenso ist es hierbei möglich, dass unter Umständen ein laufendes Telefonat oder eine laufende Faxübertragung etc. durch die Frankiermaschine unterbrochen wird, welche versucht, eine Verbindung mit der Datenzentrale herzustellen.

Der vorliegenden Erfindung liegt daher die Aufgabe zu Grunde, eine Frankiermaschine bzw. ein Verfahren zum Betreiben einer Frankiermaschine sowie ein Verfahren zur Datenkommunikation zwischen einer Frankiermaschine und einer entfernten Datenzentrale der eingangs genannten Art zur Verfügung zu stellen, bei dem die oben genannten Nachteile nicht oder zumindest in geringerem Maße auftreten und welche insbesondere für den gemeinsamen Einsatz der Frankiermaschine mit anderen Telekommunikationseinrichtungen an einer gemeinsamen Telekommunikationsleitung geeignet sind.

Diese Aufgabe wird ausgehend von einer Frankiermaschine gemäß dem Oberbegriff des Anspruchs 1 durch die im kennzeichnenden Teil des Anspruchs 1 angegebenen Merkmale gelöst. Sie wird weiterhin ausgehend von einem Verfahren gemäß dem Oberbegriff des Anspruchs 9 durch die im kennzeichnenden Teil des Anspruchs 9 angegebenen Merkmale gelöst. Ebenso wird sie ausgehend von einem Verfahren gemäß dem Oberbegriff des Anspruchs 15 durch die im kennzeichnenden Teil des Anspruchs 15 angegebenen Merkmale gelöst.

Der vorliegenden Erfindung liegt die technische Lehre zu Grunde, dass man eine für den Betrieb mit an derselben Telekommunikationsleitung angeschlossenen Telekommunikationseinrichtung geeignete Frankiermaschine erhält, wenn eine Überwachungseinrichtung zum Überwachen des Nutzungszustandes der Telekommunikationsleitung vorgesehen ist.

Durch diese Überwachungseinrichtung ist es möglich, zu verhindern, dass zum einen bestehende Verbindungen der anderen an der Telekommunikationsleitung durch einen Verbindungsaufbau bzw. deren Versuch durch die Datenübertragungseinrichtung der Frankiermaschine unterbrochen werden. Zum anderen ist es möglich, eine bestehende Verbindung zwischen der Frankiermaschine und dem Datenzentrum zu unterbrechen, um beispielsweise über ein an derselben Telekommunikationsleitung angeschlossenes Telefon einen dringenden Anruf, beispielsweise einen Notruf zu tätigen.

Bei bevorzugten Varianten der erfindungsgemäßen Frankiermaschine ist daher die Überwachungseinrichtung derart ausgebildet, dass bei Nutzung der Telekommunikationsleitung durch eine damit verbundene erste Telekommunikationseinrichtung ein Verbindungsaufbau über das Telekommunikationsnetz unterdrückt wird, um das erwähnte Unterbrechen der bestehenden Verbindung durch die Frankiermaschine auszuschließen.

Die Unterdrückung eines Verbindungsaufbaus kann auf beliebige Weise erfolgen. So kann die Überwachungseinrichtung beispielsweise einfach einen entsprechenden Schalter oder dergleichen ansteuern, der die Verbindung zwischen der Datenübertragungseinrichtung und der Telekommunikationsleitung oder der Verarbeitungseinrichtung unterbricht. Bei bevorzugten Varianten ist vorgesehen, dass die Überwachungseinrichtung zur Erzeugung eines Unterdrückungssignals ausgebildet ist, welches dann an eine weitere Einrichtung der Frankiermaschine übergeben wird, welche die Unterdrückung des Verbindungsaufbaus bei Anliegen des Unterdrückungssignals bewirkt. So kann beispielsweise die Unterdrückung des Verbindungsaufbaus durch die Datenübertragungseinrichtung realisiert sein, welche nur dann einen Verbindungsaufbau startet, wenn kein Unterdrückungssignal vorliegt.

Bevorzugt wird das Unterdrückungssignal an die Verarbeitungseinrichtung weitergegeben, welche dieses dann entsprechend verarbeitet. So kann beispielsweise vorgesehen sein, dass die Verarbeitungseinrichtung nur dann die Datenübertragungseinrichtung zum Aufbau einer Verbindung zur Datenzentrale anspricht, wenn kein Unterdrückungssignal der Überwachungseinrichtung vorliegt.

Die Überwachung des Nutzungsstatus der Telekommunikationsleitung kann kontinuierlich, d.h. ununterbrochen oder in vorgegebenen Zeitabständen erfolgen. Es versteht sich jedoch, dass sie auch nur dann erfolgen kann, wenn ein Verbindungsaufbau zwischen der Frankiermaschine und der Datenzentrale versucht werden soll.

Bei weiteren vorteilhaften Varianten der erfindungsgemäßen Frankiermaschine ist die Überwachungseinrichtung zum Erfassen eines Versuchs eines Verbindungsaufbaus über die Telekommunikationsleitung durch eine mit der Telekommunikationsleitung verbundene erste Telekommunikationseinrichtung zumindest bei Nutzung der Telekommunikationsleitung durch die Datenübertragungseinrichtung ausgebildet. Dadurch, dass erfindungsgemäß erfasst wird, wenn durch eine mit der Telekommunikationsleitung verbundene erste Telekommunikationseinrichtung versucht wird, eine Verbindung aufzubauen, ist es möglich, eine bestehende Verbindung zwischen der Frankiermaschine und der Datenzentrale im Fall eines solchen Versuchs zu unterbrechen, um in vorteilhafter Weise sicherzustellen, dass die Telekommunikationsleitung in dringenden Fällen, beispielsweise in Notfällen, nicht durch die Frankiermaschine blockiert wird. Der Benutzer muss dann in vorteilhafter Weise nicht selbst die Verbindung zwischen Frankiermaschine und Datenzentrale unterbrechen, sondern dies geschieht automatisch.

Die Erfassung eines solchen Verbindungsaufbauversuchs erfolgt - ununterbrochen oder mit einer bestimmten Frequenz - vorzugsweise während der Zeit, zu der die Frankiermaschine mit der Datenzentrale verbunden ist. Es versteht sich jedoch, dass diese Erfassung auch kontinuierlich, d.h. unterbrochen oder in vorgegebenen Zeitabständen, erfolgen kann.

Die Unterbrechung einer Verbindung zwischen Frankiermaschine und Datenzentrale kann auf beliebige Weise erfolgen. So kann die Überwachungseinrichtung beispielsweise einfach einen entsprechenden Schalter oder dergleichen ansteuern, der die Verbindung zwischen der Datenübertragungseinrichtung und der Telekommunikationsleitung oder der Verarbeitungseinrichtung unterbricht. Bei bevorzugten Varianten ist vorgesehen, dass die Überwachungseinrichtung zur Erzeugung eines ersten Unterbrechungssignals ausgebildet ist, welches dann an eine weitere Einrichtung der Frankiermaschine übergeben wird, welche wiederum die Unterbrechung der Verbindung bei Anliegen des Unterbrechungssignals bewirkt. So kann beispielsweise die Unterbrechung der Verbindung durch die Datenübertragungseinrichtung realisiert sein, welche die Verbindung bei Anliegen eines ersten Unterbrechungssignals abbricht.

Vorzugsweise gibt die Überwachungseinrichtung das erste Unterbrechungssignal an die Verarbeitungseinrichtung weiter. Hierdurch ist ein kontrollierter Abbruch der Verbindung möglich, bei dem insbesondere sichergestellt werden kann, dass keine wichtigen, beispielsweise sicherheitsrelevanten Daten verloren gehen.

Um das Risiko eines solchen Datenverlustes noch weiter zu reduzieren ist bei bevorzugten Varianten der Erfindung vorgesehen, dass ein zweites Unterbrechungssignal an die Datenzentrale weitergegeben wird, bevor die Verbindung unterbrochen wird. Dieses zweite Unterbrechungssignal kann durch die Einrichtung erzeugt werden, an welche das erste Unterbrechungssignal weitergegeben wird. So kann es beispielsweise von der Datenübertragungseinrichtung selbst oder aber auch von der Verarbeitungseinrichtung erzeugt werden. Die Erzeugung des zweiten Unterbrechungssignals durch die Verarbeitungseinrichtung bringt den Vorteil mit sich, dass das Unterbrechungssignal noch weitere Informationen, beispielsweise hinsichtlich des Status der Datenübertragung, enthalten kann. Bei weiteren, schnell reagierenden Varianten kann die Überwachungseinrichtung das zweite Unterbrechungssignal erzeugen und an die Datenzentrale übermitteln. Es versteht sich hierbei, dass das zweite Unterbrechungssignal auch dem ersten Unterbrechungssignal entsprechen kann.

Die Erfindung betrifft weiterhin ein System mit wenigstens einer erfindungsgemäßen Frankiermaschine und einer über eine Telekommunikationsleitung eines Telekommunikationsnetzes mit der Frankiermaschine verbindbaren entfernten Datenzentrale. Mit einem solchen System lassen sich die oben geschilderten Vorteile bzw. Wirkungen in derselben Weise erzielen.

Bevorzugte Ausführungen des erfindungsgemäßen Systems zeichnen sich dadurch aus, dass die Frankiermaschine eine Überwachungseinrichtung zum Erfassen eines Versuchs eines Verbindungsaufbaus über die Telekommunikationsleitung durch eine mit der Telekommunikationsleitung verbundene erste Telekommunikationseinrichtung aufweist, die zum Erzeugen eines Unterbrechungssignals ausgebildet ist. Die Frankiermaschine ist weiterhin zum Weitergeben eines zweiten Unterbrechungssignals an die Datenzentrale vor Unterbrechung der Verbindung zur Datenzentrale ausgebildet. Die Datenzentrale wiederum ist zur Übertragung in Abhängigkeit von dem Unterbrechungssignal bestimmter Daten bei einem nachfolgenden Verbindungsaufbau zur Frankiermaschine ausgebildet.

Hierdurch ist es möglich, eine infolge der vorzeitigen Unterbrechung der Verbindung unvollständige Datenübertragung in der Datenzentrale zu registrieren und bei einem nachfolgenden Verbindungsaufbau - vorzugsweise dem nächsten Verbindungsaufbau - zwischen Frankiermaschine und Datenzentrale die Datenübertragung entweder zu vervollständigen, vorzugsweise sie aber zu wiederholen. Dies ist insbesondere im Zusammenhang mit dem Portonachladevorgang von Bedeutung, bei dem zum einen sicherzustellen ist, dass das Konto des Frankiermaschinennutzers nicht zu Unrecht belastet wird, da der Nachladevorgang infolge der vorzeitigen Unterbrechung nicht abgeschlossen werden konnte und die Register der Frankiermaschine demgemäß nicht entsprechend nachgeladen wurden. Zum anderen ist hierdurch gewährleistet, dass keine Diskrepanz zwischen den Werten der postalischen Register und sonstigen Speicher der Frankiermaschine und den in der Datenzentrale diesbezüglich gespeicherten Daten ergeben.

Dieselben Vorteile und Wirkungen können mit einem erfindungsgemäßen Verfahren zur Datenkommunikation zwischen einer Frankiermaschine und einer über eine Telekommunikationsleitung eines Telekommunikationsnetzes mit der Frankiermaschine verbindbaren entfernten Datenzentrale erzielt werden, bei dem über eine Überwachungseinrichtung der Frankiermaschine ein Versuch eines Verbindungsaufbaus über die Telekommunikationsleitung durch eine mit der Telekommunikationsleitung verbundene erste Telekommunikationseinrichtung erfasst wird, daraufhin ein zweites Unterbrechungssignal generiert und an die Datenzentrale weitergegeben wird, bevor anschließend die Verbindung zur Datenzentrale unterbrochen wird, und schließlich die Datenzentrale bei einem nachfolgenden Verbindungsaufbau zur Frankiermaschine in Abhängigkeit von dem Unterbrechungssignal bestimmte Daten übernimmt.

Weitere vorteilhafte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:
- Figur 1: ein Blockschaltbild einer bevorzugten Ausführung des erfindungsgemäßen Systems mit einer erfindungsgemäßen Frankiermaschine;
- Figur 2: ein Ablaufdiagramm einer bevorzugten Variante des erfindungsgemäßen Verfahrens;
- Figur 3: ein Ablaufdiagramm einer weiteren bevorzugten Variante des erfindungsgemäßen Verfahrens.

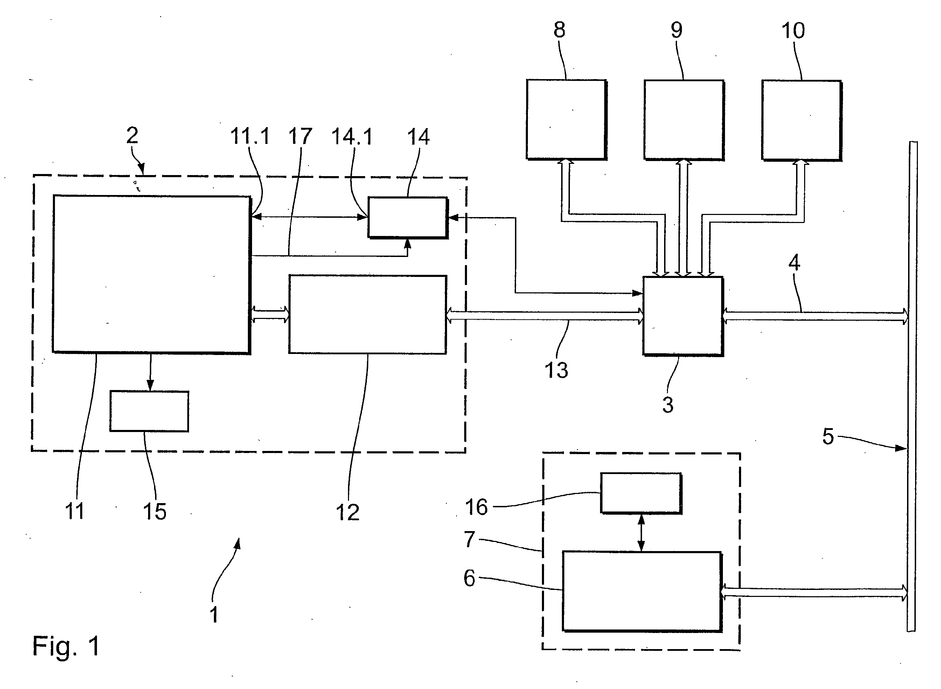

Figur 1 zeigt ein Blockschaltbild einer bevorzugten Ausführung des erfindungsgemäßen Systems 1 mit einer erfindungsgemäßen Frankiermaschine 2, die über eine Anschlusseinrichtung in Form eines Mehrfachanschlusses 3 mit der Telekommunikationsleitung in Form einer Telefonleitung 4 eines Telefonnetzes 5 verbunden ist. Über das Telefonnetz 5 kann die Frankiermaschine 2 so mit der Zentraleinheit 6 einer entfernten Datenzentrale 7 verbunden werden.

Neben der Frankiermaschine 2 sind über den Mehrfachanschluss 3 noch weitere Telekommunikationseinrichtungen mit der Telefonleitung 4 verbunden, nämlich ein Telefon 8, ein Telefaxgerät 9 und ein Computer 10 mit einer entsprechenden Datenübertragungseinrichtung für den Zugang zum Internet oder dergleichen.

Die Frankiermaschine 2 umfasst unter anderem eine zentrale Verarbeitungseinheit 11 und eine damit verbundene Datenübertragungseinrichtung in Form eines Modems 12, das wiederum über Verbindungsmittel in Form einer Anschlussleitung 13 mit dem Mehrfachanschluss 3 verbunden ist. Die Frankiermaschine 2 umfasst weiterhin eine mit der Verarbeitungseinheit 11 und dem Mehrfachanschluss 3 verbundene Überwachungseinrichtung 14.

Die Überwachungseinrichtung 14 dient zum Überwachen des Nutzungszustandes der Telefonleitung 4, bei der es sich um eine ISDN-Leitung mit zwei parallel zueinander nutzbaren Kanälen handelt. Das Modem 12 ist einem der beiden parallel nutzbaren Kanäle der Telefonleitung 4 zugeordnet, dem zusätzlich auch noch das Telefon 8 zugeordnet ist. Die Überwachungseinrichtung 14 überwacht den Nutzungszustand dieses Kanals der Telefonleitung 4.

Bei einer ersten Konstellation, bei der ein Verbindungsaufbau zwischen der Frankiermaschine 2 und der Datenzentrale 7 versucht werden soll, liegt für den Fall, dass der betreffende Kanal der Telefonleitung 4 genutzt wird, am Ausgang 14.1. der Überwachungseinrichtung 14 und damit auch am Eingang 11.1 der Verarbeitungseinheit 11 ein erster Zustand an, der ein Unterdrückungssignal UDS darstellt. Liegt am Eingang 11.1 der Verarbeitungseinheit 11 das Unterdrückungssignal UDS an, wird die Verarbeitungseinheit 11 daran gehindert, einen Verbindungsaufbau zur Zentraleinheit 6 der Datenzentrale 7 zu initiieren. Mit anderen Worten spricht die Verarbeitungseinheit 11 nur dann das Modem 12 zum Aufbau einer Verbindung zur Datenzentrale 7 an, wenn kein Unterdrückungssignal UDS der Überwachungseinrichtung 14 vorliegt.

Hierdurch wird verhindert, dass eine bestehende Verbindung des demselben Kanal zugeordneten Telefons 8 durch den Versuch eines Verbindungsaufbaus zur Zentraleinheit 6 der Datenzentrale 7 unterbrochen wird.

In einer zweiten Konstellation, bei der bereits eine Verbindung zwischen der Frankiermaschine 2 und der Datenzentrale 7 besteht, überwacht die Überwachungseinrichtung 14 ebenfalls den Nutzungszustand des betreffenden Kanals der Telefonleitung 4. Bei dieser zweiten Konstellation erfasst die Überwachungseinrichtung 14, ob mit dem Telefon 8 versucht wird, eine Verbindung über das Telefonnetz aufzubauen. Ist dies der Fall, liegt am Ausgang 14.1 der Überwachungseinrichtung 14 und damit auch am Eingang 11.1 der Verarbeitungseinheit 11 ein zweiter Zustand an, der ein erstes Unterbrechungssignal UBS1 repräsentiert.

Liegt am Eingang 11.1 der Verarbeitungseinheit 11 das erste Unterbrechungssignal UBS1 an, wird die Verarbeitungseinheit 11 zunächst veranlasst, ein zweites Unterbrechungssignal UBS2 zu generieren und dieses über die noch bestehende Verbindung an die Zentraleinheit 6 der Datenzen-trale 7 zu senden. Anschließend veranlasst die Verarbeitungseinheit 11 das Modem 12, die Verbindung zur Datenzentrale 7 abzubrechen.

Hiermit ist gewährleistet, dass eine bestehende Verbindung zwischen der Frankiermaschine 2 und dem Datenzentrum 7 automatisch unterbrochen wird, um über das Telefon 8 einen dringenden Anruf, beispielsweise einen Notruf zu tätigen.

Um sicherzustellen, dass die Unterbrechung der Verbindung zwischen der Frankiermaschine 2 und dem Datenzentrum 7 nicht unbeabsichtigt unterbrochen wird, weist die Frankiermaschine 2 eine akustische Signaleinrichtung 15 auf, die angesteuert von der Verarbeitungseinheit 11 nach Anliegen des ersten Unterbrechungssignals UBS1 dem Benutzer des Telefons 8 signalisiert, dass er im Begriff ist, eine bestehende Verbindung zwischen der Frankiermaschine 2 und dem Datenzentrum 7 zu unterbrechen.

Die Unterbrechung der Verbindung zwischen der Frankiermaschine 2 und dem Datenzentrum 7 erfolgt etwas zeitverzögert, nämlich nur dann, wenn die Überwachungseinrichtung 14 nach einer vorgegebenen Zeitspanne, beispielsweise 5s, die vom Benutzer an der Frankiermaschine 2 eingestellt werden kann, immer noch einen Verbindungsaufbauversuch erfasst, d.h. das erste Unterbrechungssignal UBS1 immer noch am Eingang 11.1 anliegt. Dies ermöglicht es dem Benutzer des Telefons 8, den Verbindungsaufbau abzubrechen, d.h. wieder aufzulegen, ohne dass es zu einer Unterbrechung der Verbindung zwischen der Frankiermaschine 2 und dem Datenzentrum 7 kommt.

Es versteht sich, dass die Signaleinrichtung bei anderen Varianten der vorliegenden Erfindung auch in anderer Weise realisiert sein kann, beispielsweise als optische oder optische und akustische Signaleinrichtung. Ebenso kann bei entsprechender Vernetzung vorgesehen sein, dass die Signaleinrichtung im anderen Telekommunikationsgerät, also beispielsweise dem Telefon, integriert ist und angesteuert durch die Frankiermaschine ein entsprechendes Signal, beispielsweise einen Warnton oder aber auch eine Sprachnachricht, an den Benutzer des anderen Telekommunikationsgeräts abgibt. Weiterhin versteht es sich aber, dass eine solche Signaleinrichtung auch nicht vorgesehen sein kann, sondern ohne Warnung ein automatischer Abbruch erfolgt.

Die Weitergabe des ersten Unterbrechungssignals UBS1 an die Verarbeitungseinheit ermöglicht einen kontrollierten Abbruch der Verbindung zwischen der Frankiermaschine 2 und dem Datenzentrum 7, bei dem sichergesellt werden kann, dass keine wichtigen, beispielsweise sicherheitsrelevanten Daten verloren gehen.

Das Risiko eines solchen Datenverlustes wird durch das an die Zentraleinheit 6 der Datenzentrale 7 gesandte zweite Unterbrechungssignal UBS2 noch weiter reduziert. Dieses zweite Unterbrechungssignal UBS2 enthält Informationen hinsichtlich des Status der unterbrochenen Datenübertragung. Dieses zweite Unterbrechungssignal UBS2 wird in einer mit der Zentraleinheit 6 der Datenzentrale 7 verbundenen Speichereinrichtung 16 abgelegt, wobei sie eindeutig der Frankiermaschine 2 zugeordnet wird. Auf diese Speichereinrichtung 16 wird bei jeder Kommunikation mit der Frankiermaschine 2 zugegriffen. In Abhängigkeit davon, ob bei der letzten Verbindung mit der Frankiermaschine 2 ein solches zweites Unterbrechungssignal UBS2 gespeichert wurde, wiederholt die Zentraleinheit 6 beim nächstfolgenden Verbindungsaufbau zur Frankiermaschine 2 die beim vorherigen Versuch abgebrochene Datenübertragung.

Hierdurch wird mit anderen Worten eine infolge der vorzeitigen Unterbrechung der Verbindung unvollständige Datenübertragung in der Datenzentrale 7 registriert und beim nächsten Verbindungsaufbau zwischen Frankiermaschine 2 und Datenzentrale 7 wiederholt. Dies ist insbesondere im Zusammenhang mit dem Portonachladevorgang von Bedeutung, bei dem zum einen sicherzustellen ist, dass das Konto des Frankiermaschinennutzers nicht zu Unrecht belastet wird, da der Nachladevorgang infolge der vorzeitigen Unterbrechung nicht abgeschlossen werden konnte und die Register der Frankiermaschine 2 demgemäß nicht entsprechend nachgeladen wurden. Zum anderen ist hierdurch gewährleistet, dass keine Diskrepanz zwischen den Werten der - nicht dargestellten - postalischen Register und sonstigen Speicher der Frankiermaschine 2 und den in der Datenzentrale 7 diesbezüglich gespeicherten Daten ergeben.

Die Überwachung des Nutzungsstatus des betreffenden Kanals der Telefonleitung 4 erfolgt im gezeigten Beispiel bei beiden Konstellationen nur dann, wenn - bei der ersten Konstellation - ein Verbindungsaufbau zwischen der Frankiermaschine 2 und der Datenzentrale 7 versucht werden soll oder wenn - bei der zweiten Konstellation - bereits eine Verbindung zwischen der Frankiermaschine 2 und der Datenzentrale 7 besteht. Hierzu wird die Überwachungseinrichtung 14 über die Steuerleitung 17 entsprechend durch die Verarbeitungseinheit 11 angesteuert. Bei der zweiten Konstellation erfolgt die initiierte Überwachung dann in kurzen zeitlichen Abständen.

Bei dem ersten und zweiten Zustand am Ausgang 14.1 der Überwachungseinrichtung 14 kann es sich im übrigen um unterschiedliche Zustände handeln. Es versteht sich jedoch, dass es sich im einfachsten Fall auch um ein und denselben Zustand handeln kann, der dann durch die Verarbeitungseinheit entsprechend interpretiert wird: als Unterdrückungssignal UDS, wenn gerade ein Verbindungsaufbau versucht wird, oder als erstes Unterbrechungssignal UBS1, wenn gerade eine Übertragung läuft bzw. eine Verbindung zur Datenzentrale besteht oder aufgebaut wird.

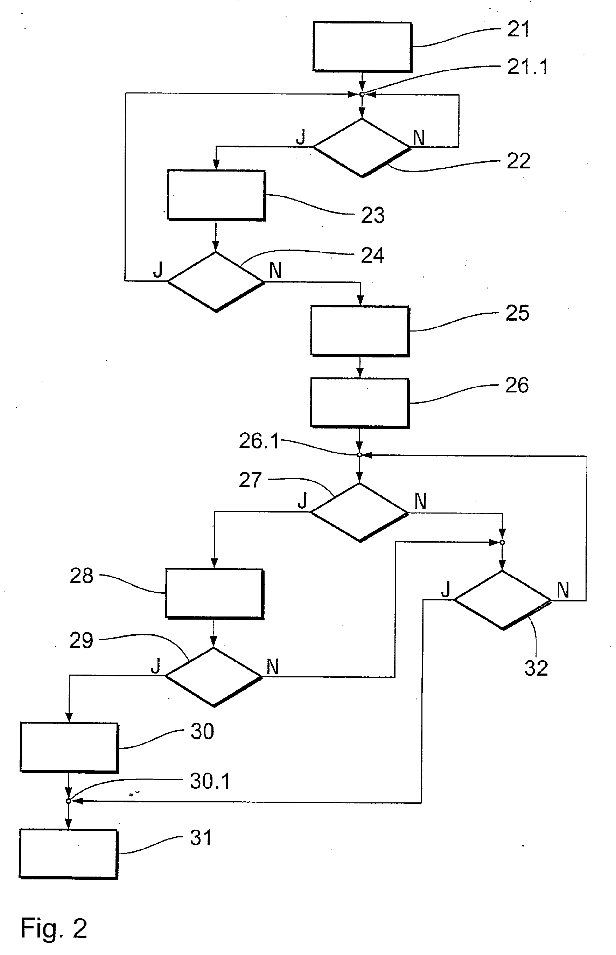

Figur 2 zeigt ein Ablaufdiagramm einer bevorzugten Variante des erfindungsgemäßen Verfahrens zum Betreiben der Frankiermaschine 2, welches den Verfahrensablauf nochmals verdeutlichen soll.

In einem ersten Schritt 21 tritt in der Verarbeitungseinheit 11 der Frankiermaschine 2 eine Anforderung eines Verbindungsaufbaus zur Datenzentrale 7 auf. Diese Anforderung kann in Abhängigkeit von bestimmten Kriterien von der Frankiermaschine 2 selbst erzeugt sein oder durch einen Benutzer der Frankiermaschine 2 eingegeben worden sein.

Nach einer Überprüfung des tatsächlichen Vorliegens einer solchen Anforderung in einem zweiten Schritt 22 initiiert die Verarbeitungseinheit 11 in einem dritten Schritt 23 die Überwachung des Nutzungsstatus der Telefonleitung 4 durch die Überwachungseinrichtung 14.

In einem vierten Schritt 24 überprüft die Verarbeitungseinheit 11, ob ein Unterdrückungssignal UDS der Überwachungseinrichtung 14 an ihrem Eingang 11.1 anliegt. Ist dies der Fall, wird zum Punkt 21.1 und damit zum zweiten Schritt 22 zurückgekehrt.

Ist dies jedoch nicht der Fall, d.h. wird der entsprechende Kanal der Telefonleitung 4 zu diesem Zeitpunkt nicht genutzt, initiiert die Verarbeitungseinheit 11 in einem fünften Schritt 25 den Verbindungsaufbau zur Datenzentrale 7, indem sie das Modem 12 entsprechend ansteuert.

In einem sechsten Schritt 26 initiiert die Verarbeitungseinheit 11 wiederum die in kurzen Zeitabständen erfolgende Überwachung des Nutzungsstatus der Telefonleitung 4 durch die Überwachungseinrichtung 14.

In einem siebten Schritt 27 überprüft die Verarbeitungseinheit 11, ob ein erstes Unterbrechungssignal UBS1 der Überwachungseinrichtung 14 an ihrem Eingang 11.1 anliegt. Es wird mit anderen Worten geprüft, ob mit dem Telefon 8 versucht wird, eine Verbindung zum Telefonnetz 5 aufzubauen.

Ist dies der Fall, steuert die Verarbeitungseinheit 11 in einem achten Schritt 28 die Signaleinrichtung 15 zur Abgabe des Warnsignals an und es erfolgt in einem neunten Schritt 29 nach der genannten Zeitverzögerung die erneute Überprüfung, ob weiterhin ein erstes Unterbrechungssignal UBS1 der Überwachungseinrichtung 14 an ihrem Eingang 11.1 anliegt.

Ist dies der Fall, generiert die Verarbeitungseinheit 11 in einem zehnten Schritt 30 ein zweites Unterbrechungssignal UBS2 und veranlasst dessen Übermittlung über die bestehende Verbindung an die Datenzentrale 7.

Schließlich initiiert die Verarbeitungseinheit 11 in einem elften Schritt 31 den Abbruch der Verbindung zur Datenzentrale 7, indem sie das Modem 12 wiederum entsprechend ansteuert. Die Verbindung wird dann abgebrochen und die Telefonleitung 4 kann von dem Telefon 8 genutzt werden.

In dem elften Schritt 31 veranlasst die Verarbeitungseinheit 11 im übrigen noch das Ende der Überwachung des Nutzungsstatus der Telefonleitung 4 durch die Überwachungseinrichtung 14, indem sie diese entsprechend ansteuert.

Liegt hingegen in dem siebten Schritt 27 kein erstes Unterbrechungssignal am Eingang 11.1 der Verarbeitungseinheit 11 an, überprüft diese in einem zwölften Schritt 32, ob die Datenübertragung zur Datenzentrale bereits abgeschlossen ist. Dasselbe erfolgt im übrigen, wenn in dem neunten Schritt 29 kein erstes Unterbrechungssignal mehr am Eingang 11.1 der Verarbeitungseinheit 11 anliegt, d.h. der Nutzer des Telefons wieder aufgelegt hat, und demgemäß zum Punkt 27.1 gesprungen wird.

Ergibt die Überprüfung im zwölften Schritt 32, dass die Datenübertragung noch nicht abgeschlossen ist, wird zum Punkt 26.1 und damit zum siebten Schritt zurückgesprungen.

Ergibt die Überprüfung im zwölften Schritt 32 hingegen, dass die Datenübertragung abgeschlossen ist, wird zum Punkt 30.1 und damit zum elften Schritt gesprungen, in dem die Verbindung zur Datenzentrale beendet wird.

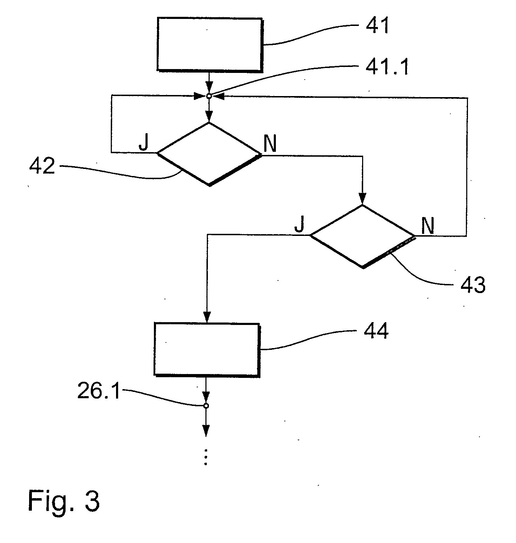

Figur 3 zeigt einen Teil eines Ablaufdiagramms einer weiteren bevorzugten Variante des erfindungsgemäßen Verfahrens, welches sich ebenfalls mit der Frankiermaschine 2 aus Figur 1 realisieren lässt.

Bei dieser Variante initiiert die Verarbeitungseinheit 11 in einem ersten Schritt 41 die kontinuierliche Überwachung des Nutzungsstatus der Telefonleitung 4 durch die Überwachungseinrichtung 14.

In einem zweiten Schritt 42 überprüft die Verarbeitungseinheit 11, ob ein Unterdrückungssignal UDS der Überwachungseinrichtung 14 an ihrem Eingang 11.1 anliegt. Ist dies der Fall, wird zum Punkt 41.1 und damit zum zweiten Schritt 22 zurückgekehrt.

Ist dies nicht der Fall, wird in einem dritten Schritt 43 in der Verarbeitungseinheit 11 der Frankiermaschine 2 überprüft, ob eine Anforderung eines Verbindungsaufbaus zur Datenzentrale 7 vorliegt. Diese Anforderung kann wiederum in Abhängigkeit von bestimmten Kriterien von der Frankiermaschine 2 selbst erzeugt sein oder durch einen Benutzer der Frankiermaschine 2 eingegeben worden sein.

Ist dies nicht der Fall, wird zum Punkt 41.1 und damit zum zweiten Schritt 22 zurückgekehrt.

Liegt jedoch im dritten Schritt eine Anforderung eines Verbindungsaufbaus zur Datenzentrale 7 vor, initiiert die Verarbeitungseinheit 11 in einem vierten Schritt 44 den Verbindungsaufbau zur Datenzentrale 7, indem sie das Modem 12 entsprechend ansteuert. Anschließend wird beginnend bei Punkt 26.1 wie zu Figur 2 beschrieben weiterverfahren.

Die Erfindung wurde vorstehend so beschrieben, dass eine feste Zuordnung der Frankiermaschine und dem Telefon 8 zu einem Kanal der Telefonleitung 4 besteht. Es versteht sich, dass auch die übrigen Telekommunikationseinrichtungen 9 und 10 diesem Kanal zugeordnet sein können oder gegebenenfalls - bei einem normalen Telefonanschluss - nur ein einziger solcher Kanal vorhanden ist. Die Aktivitäten der anderen Telekommunikationseinrichtungen 9 und 10 können dann in derselben Weise wie diejenigen des Telefons 8 erfasst und berücksichtigt werden.

Die Erfindung wurde vorstehen weiterhin so beschrieben, dass eine feste Zuordnung der Frankiermaschine 2 und der weiteren Telekommunikationseinrichtungen 8 bis 10 zu den einzelnen Kanälen der Telefonleitung besteht.

Es versteht sich jedoch, dass bei anderen Varianten auch keine solche feste Zuordnung bestehen kann. Die Überwachungseinrichtung kann dann auch so ausgebildet sein, dass sie alle vorhandenen Kanäle überwacht und nur dann den Verbindungsaufbau unterdrückt, wenn keiner der Kanäle frei ist. Ebenso kann sie so ausgebildet sein, dass sie nur dann die bestehende Verbindung zur Datenzentrale unterdrückt, wenn kein freier Kanal vorhanden ist.

Die Erfindung wurde vorstehend anhand einer Frankiermaschine mit Modem 12 und Überwachungseinrichtung 14 als getrennte Einheiten beschrieben. Es versteht sich jedoch, dass diese bevorzugte baulich in einer gemeinsamen Einheit integriert sein können, wie dies beispielsweise bei dem Si2400 ISOmodem ™ der Firma Silicon Laboratories, Inc. Austin, TX, U.S.A., der Fall ist.

## Patentansprüche

1. Frankiermaschine mit einer zentralen Verarbeitungseinrichtung (11) und einer damit verbundenen Datenübertragungseinrichtung (12) zum Übertragen von Informationen über ein Telekommunikationsnetz (5) zwischen der Verarbeitungseinrichtung (11) und einer entfernten Datenzentrale (7), wobei die Datenübertragungseinrichtung (12) Verbindungsmittel (13) zum Verbinden mit einer Telekommunikationsleitung (4) des Telekommunikationsnetzes (5) aufweist, **dadurch gekennzeichnet, dass** eine Überwachungseinrichtung (14) zum Überwachen des Nutzungszustandes der Telekommunikationsleitung (4) vorgesehen ist.

2. Frankiermaschine nach Anspruch 1, **dadurch gekennzeichnet, dass** die Überwachungseinrichtung (14) derart ausgebildet ist, dass bei Nutzung der Telekommunikationsleitung (4) durch eine damit verbundene erste Telekommunikationseinrichtung (8) ein Verbindungsaufbau über das Telekommunikationsnetz (5) unterdrückt wird.

3. Frankiermaschine nach Anspruch 2, **dadurch gekennzeichnet, dass** die Überwachungseinrichtung (14) zur Erzeugung eines Unterdrückungssignals und vorzugsweise zur Weitergabe des Unterdrückungssignals an die Verarbeitungseinrichtung ausgebildet ist.

4. Frankiermaschine nach einem der vorhergehenden Ansprüche, **dadurch gekennzeichnet, dass** die Überwachungseinrichtung (14) zum Erfassen eines Versuchs eines Verbindungsaufbaus über die Telekommunikationsleitung (4) durch eine mit der Telekommunikationsleitung (4) verbundene erste Telekommunikationseinrichtung (5) zumindest bei Nutzung der Telekommunikationsleitung (4) durch die Datenübertragungseinrichtung (12) ausgebildet ist.

5. Frankiermaschine nach Anspruch 4, **dadurch gekennzeichnet, dass** die Überwachungseinrichtung (14) derart ausgebildet ist, dass bei Nutzung der Telekommunikationsleitung (4) durch die Datenübertragungseinrichtung (12) und Erfassung des Verbindungsaufbauversuchs der ersten Telekommunikationseinrichtung (8) durch die Überwachungseinrichtung (14) ein erstes Unterbrechungssignal zum Unterbrechen der Nutzung der Telekommunikationsleitung (4) durch die Datenübertragungseinrichtung (12) erzeugt wird, wobei die Überwachungseinrichtung (14) vorzugsweise zum Weitergeben des ersten Unterbrechungssignals an die Verarbeitungseinrichtung (11) ausgebildet ist.

6. Frankiermaschine nach Anspruch 5, **dadurch gekennzeichnet, dass** die Überwachungseinrichtung (14) oder die Datenübertragungseinrichtung (12) oder die Verarbeitungseinrichtung (11) zum Erzeugen und Weitergeben eines zweiten Unterbrechungssignals an die Datenzentrale (7) vor Unterbrechung der Verbindung zur Datenzentrale (7) ausgebildet ist.

7. System mit wenigstens einer Frankiermaschine (2) nach einem der vorhergehenden Ansprüche und einer über eine Telekommunikationsleitung (4) eines Telekommunikationsnetzes (5) mit der Frankiermaschine (2) verbindbaren entfernten Datenzentrale (7).

8. System nach Anspruch 7, **dadurch gekennzeichnet, dass** die Frankiermaschine (2)
- eine Überwachungseinrichtung (14) zum Erfassen eines Versuchs eines Verbindungsaufbaus über die Telekommunikationsleitung (4) durch eine mit der Telekommunikationsleitung (4) verbundene erste Telekommunikationseinrichtung (8) aufweist, die zum Erzeugen eines ersten Unterbrechungssignals ausgebildet ist,
- zum Erzeugen und Weitergeben eines zweiten Unterbrechungssignals an die Datenzentrale (7) vor Unterbrechung der Verbindung zur Datenzentrale (7) ausgebildet ist und
die Datenzentrale (7) zur Übertragung in Abhängigkeit von dem Unterbrechungssignal bestimmte Daten bei einem nachfolgenden Verbindungsaufbau zur Frankiermaschine (2) ausgebildet ist.

9. Verfahren zum Betreiben einer Frankiermaschine (2) mit einer zentralen Verarbeitungseinrichtung (11) und einer damit verbundenen Datenübertragungseinrichtung (12) zum Übertragen von Informationen über ein Telekommunikationsnetz (5) zwischen der Verarbeitungseinrichtung (11) und einer entfernten Datenzentrale (7), wobei die Datenübertragungseinrichtung (12) mit einer Telekommunikationsleitung (4) des Telekommunikationsnetzes (5) verbunden ist, **dadurch gekennzeichnet, dass** der Nutzungszustand der Telekommunikationsleitung (4) über eine Überwachungseinrichtung (14) überwacht wird.

10. Verfahren nach Anspruch 9, **dadurch gekennzeichnet, dass** bei einer durch die Überwachungseinrichtung (14) festgestellten Nutzung der Telekommunikationsleitung (4) durch eine damit verbundene erste Telekommunikationseinrichtung (8, 9, 10) ein Verbindungsaufbau über das Telekommunikationsnetz (5) unterdrückt wird.

11. Verfahren nach Anspruch 10, **dadurch gekennzeichnet, dass** zum Unterdrücken des Verbindungsaufbaus ein Unterdrückungssignal von der Überwachungseinrichtung (14) an die Verarbeitungseinrichtung (11) weitergegeben wird.

12. Verfahren nach einem der Ansprüche 9 bis 11, **dadurch gekennzeichnet, dass** die Überwachungseinrichtung (14) den Versuch eines Verbindungsaufbaus über die Telekommunikationsleitung (4) durch eine mit der Telekommunikationsleitung (4) verbundene erste Telekommunikationseinrichtung (8, 9, 10) zumindest bei Nutzung der Telekommunikationsleitung (4) durch die Datenübertragungseinrichtung (12) erfasst.

13. Verfahren nach Anspruch 12, **dadurch gekennzeichnet, dass** die Überwachungseinrichtung (14) ein erstes Unterbrechungssignal zum Unterbrechen der Nutzung der Telekommunikationsleitung (4) durch die Datenübertragungseinrichtung (12) erzeugt, wenn die Telekommunikationsleitung (4) durch die Datenübertragungseinrichtung (12) genutzt wird und ein Verbindungsaufbauversuch der ersten Telekommunikationseinrichtung (8, 9, 10) erfasst wird, wobei das Unterbrechungssignal vorzugsweise an die Verarbeitungseinrichtung (11) weitergegeben wird.

14. Verfahren nach Anspruch 12 oder 13, **dadurch gekennzeichnet, dass** ein zweites Unterbrechungssignal erzeugt und vor Unterbrechung der Verbindung zur Datenzentrale (7) an die Datenzentrale (7) weitergegeben wird.

15. Verfahren zur Datenkommunikation zwischen einer Frankiermaschine (2) und einer über eine Telekommunikationsleitung (4) eines Telekommunikationsnetzes (5) mit der Frankiermaschine (2) verbindbaren entfernten Datenzentrale (7), **dadurch gekennzeichnet, dass** über eine Überwachungseinrichtung (14) der Frankiermaschine (2) ein Versuch eines Verbindungsaufbaus über die Telekommunikationsleitung (4) durch eine mit der Telekommunikationsleitung (4) verbundene erste Telekommunikationseinrichtung (8, 9, 10) erfasst wird, daraufhin ein zweites Unterbrechungssignal an die Datenzentrale (7) weitergegeben wird, bevor anschließend die Verbindung zur Datenzentrale (7) unterbrochen wird, und die Datenzentrale (7) bei einem nachfolgenden Verbindungsaufbau zur Frankiermaschine (2) in Abhängigkeit von dem Unterbrechungssignal bestimmte Daten übermittelt.
